# FASCICULE DE BREVET EUROPEEN

(11) **EP 2 414 429 B1**
(45) Date de publication et mention de la délivrance du brevet: **17.07.2013**
(21) Numéro de dépôt: 10717698.4
(22) Date de dépôt: 31.03.2010
(51) Int. Cl.: C08G 64/30, C08G 64/02

(54) **SYSTEME ORGANIQUE POUR LA POLYMERISATION PAR OUVERTURE DE CYCLE DE CARBONATES CYCLIQUES POUR L'OBTENTION DE (BIO)-POLYCARBONATES**
ORGANISCHES SYSTEM FÜR DIE RINGÖFFNUNGSPOLYMERISATION VON CYCLISCHEN CARBONATEN ZUM ERHALT VON (BIO)POLYCARBONATEN
ORGANIC SYSTEM FOR THE RING-OPENING POLYMERIZATION OF CYCLIC CARBONATES IN ORDER TO OBTAIN (BIO)-POLYCARBONATES

(30) Priorité: 31.03.2009 FR 0952057
(43) Date de publication de la demande: 08.02.2012
(73) Titulaire: Arkema France, 92700 Colombes (FR); Centre National de la Recherche Scientifique, 75795 Paris (FR); Universite Paul Sabatier Toulouse, 31062 Toulouse (FR)
(72) Inventeur: NAVARRO, Christophe, F-64990 Lahonce (FR); BOURISSOU, Didier, F-31830 Plaisance Du Touch (FR); MARTIN-VACA, Blanca, F-31100 Toulouse (FR); DELCROIX, Damien, F-82100 Castelsarrasin (FR)
(74) Mandataire: Delprat, Corinne
(86) Numéro de dépôt international: PCT/FR2010/050608
(87) Numéro de publication internationale: WO 2010/112770

(56) Documents cités:
- S. NAKANO: "Polycarbonate-modified acrylic polymers for coating materials" PROGRESS IN ORGANIC COATINGS, vol. 35, 1999, pages 141-151, XP002533636
- JYUHOU MATSUO, SHINJI NAKANO, FUMIO SANDA, TAKESHI ENDO: "Ring-Opening Polymerization of Cyclic Carbonates by Alcohol?Acid Catalyst" JOURNAL OF POLYMER SCIENCE: PART A: POLYMER CHEMISTRY, vol. 36, 1998, pages 2463-2471, XP002533637
- YUJI SHIBASAKI, HIDETSUGU SANADA, MAKIKO YOKOI, FUMIO SANDA, TAKESHI ENDO: "Activated Monomer Cationic Polymerization of Lactones and the Application to Well-Defined Block Copolymer Synthesis with Seven-Membered Cyclic Carbonate" MACROMOLECULES, vol. 33, 2000, pages 4316-4320, XP002533638

## Description

La présente invention concerne la polymérisation par ouverture de cycle de carbonates cycliques. Plus précisément, l'invention a pour objet un nouveau système organique cationique, ayant comme catalyseur un acide sulfonique, pour la polymérisation de carbonates, et un procédé de polymérisation permettant l'obtention de bio-polycarbonates exempts d'unités éthers intercalées par décarboxylation.

Les polycarbonates sont une classe importante de biomatériaux sous forme d'homopolymères ou de copolymères avec d'autres polyesters biodégradables. Des polymères biodégradables à architecture contrôlée sont utilisés pour encapsuler ou véhiculer des médicaments à libération contrôlée. Les implants biodégradables connaissent un réel succés, en particulier en orthopédie, en supprimant les interventions qui étaient nécessaires dans le passé pour retirer les pièces métalliques telles que les broches, avec des risques de nouvelle fracture lors de leur retrait. Les vis de ménisque pour réparer les cartilages du genou peuvent être formulées avec la rigidité souhaitée en incorporant du triméthylène carbonate dans le réseau. Ils tiennent également une place de choix en formulation de revêtements et de plastiques dans la chimie de la mélamine et des uréthanes.

Les polymérisations anioniques et par coordination-insertion sont principalement amorcées par des complexes ou alcoolates métalliques et le phénomène de décarboxylation y est rare. Cependant, la présence de composés métalliques mis en oeuvre dans ces procédés de polymérisation peut avoir un effet néfaste sur la stabilité et/ou les performances des polymères synthétisés. Il est d'ailleurs bien connu que les sels métalliques catalysent la dégradation de polycarbonates lors de leur mise en oeuvre, ou sont indésirables lorsque ces polymères sont utilisés dans des applications biomédicales.

Il est donc nécessaire d'opérer une étape de purification du milieu réactionnel final pour éliminer les traces métalliques résiduelles. Cette étape de traitement post-polymérisation est particulièrement délicate et peut s'avérer onéreuse pour une efficacité parfois discutable.

D'un autre côté, les catalyses cationiques de polymérisation présentent quasi systématiquement des problèmes de décarboxylation des polycarbonates. Le phénomène de décarboxylation est indésirable puisqu'il réduit la stabilité thermique et UV du matériau ainsi obtenu.

Des procédés alternatifs, n'ayant pas recours à des catalyseurs métalliques, ont alors été proposés. Ces procédés mettent en oeuvre des acides ou agents alkylants qui jouent le rôle de catalyseur en activant la fonction carbonate. Ces mécanismes permettent alors de s'affranchir de l'utilisation de complexes organométalliques dans le milieu réactionnel. Kricheldorf et al. proposent l'utilisation de triflate de méthyle (MeOTf) et de tétrafluoroborate de triéthyloxonium (BF₄⁻_{.}Et₃O⁺) comme initiateurs de polymérisation de Triméthylènecarbonate (TMC) dans des solvants chlorés et le nitrobenzène, entre 25 et 50°C (J. Macromol. Sci., Chem., A 26(4), 631-44 (1989)). Des réactions de transfert ne leur permettent pas de dépasser une masse moléculaire moyenne en nombre (Mₙ) de 6.000 g/mol avec de surcroît des unités éthers intercalées à hauteur de 5 à 10%, relativement aux unités carbonates.

Endo et al. testent ces mêmes systèmes catalytiques sur le TMC dans des conditions diverses de température et de solvants, afin de minimiser la proportion de liens éthers (Macromolecules 30, 737-744 (1997)). Leurs proportions restent cependant élevées de 6 à 29% et les indices de polymolécularité entre 1,5 et 3,1 pour un Mₙ maximal de 2.000 à 13.000 g/mol (mesuré par chromatographie par perméation de gel, ou GPC). Ces auteurs proposent par ailleurs l'utilisation d'agents alkylants plus doux, comme l'iodure de méthyle (Mel) ou le bromure de benzyle (BnBr). La décarboxylation n'apparaît plus mais la mise en oeuvre nécessite des temps de réaction très longs de 18 à 96h, avec des charges de catalyseurs élevées, de l0 à 20%, et à des températures supérieures à 100°C. Les indices de polymolécularité sont de 1,5 à 3 pour une gamme de Mₙ de 1.000 à 3.700 g/mol.

Dans J. Pol. Sci. : Part A 36, 2463-2471 (1998) il est envisagé un nouveau système catalytique composé d'acide trifluoroacétique comme catalyseur et d'un amorceur protique du type alcool ou eau. La décarboxylation est absente pour des températures de 0 et 50°C, respectivement pour le dichlorométhane et le toluène, et avec des temps de réaction longs, de 30 et 24h respectivement.

Dans Macromolecules 33, 4316-4320 (2000), le système catalytique est formé d'acide chlorhydrique éthéré et eau ou alcool butylique. L'absence de décarboxylation est mise en évidence pour des durées longues de 24h à 25°C ou bien pour des durées courtes de 1,5 ou 3h mais à des températures de -40°C.

Ces systèmes organiques formés d'acide trifluoroacétique ou acide chlorhydrique éthéré et d'alcool, bien que n'induisant aucune décarboxylation, nécessitent soit des temps de réaction très longs (à des températures de 0°C ou de 25°C), soit des températures très basses (-40°C) pour des durées plus courtes. Dans les deux cas les conditions de travail sont incompatibles avec une exploitation à l'échelle industrielle du procédé.

Il serait donc souhaitable de disposer de nouveaux systèmes et procédés permettant de préparer des polycarbonates sans unités éthers intercalées, de faible indice de polymolécularité, selon un procédé économique impliquant en particulier des temps de réaction courts combinés à des températures proches de la température ambiante et en l'absence de toute trace d'espèce métallique.

Or, la Demanderesse a découvert que ce besoin pouvait être satisfait en utilisant des acides sulfoniques particuliers comme catalyseur et de l'eau ou un alcool comme amorceur. Avec ce système organo-catalytique, une faible charge de catalyseur permet des temps de réaction courts, même sans chauffage. De plus, le système catalytique ne provoque aucune décarboxylation, même à des températures supérieures à l'ambiante. Selon un premier aspect, la présente invention a pour objet un système catalytique pour la réaction de polymérisation par ouverture de cycle de carbonates cycliques, ledit système étant formé d'un amorceur et, comme catalyseur, d'un acide sulfonique de formule R'-SO₃H où R' désigne :
- un groupe alkyle linéaire renfermant de 1 à 20 atomes de carbone ou un groupe alkyle ramifié ou cyclique renfermant de 3 à 20 atomes de carbone, éventuellement substitués par un ou plusieurs substituants indépendamment choisis parmi des groupes oxo et halo, comme par exemple le fluor, le chlore, le brome ou l'iode, ou
- un groupe aryle éventuellement substitué par au moins :
   - un substituant alkyle linéaire renfermant de 2 à 20 atomes de carbone ou un groupe alkyle ramifié ou cyclique renfermant de 3 à 20 atomes de carbone, ledit substituant alkyle étant lui-même éventuellement substitué par au moins un groupement halogéné choisi parmi le fluor, le chlore, le brome ou l'iode ou par un groupement nitro, ou
   - un groupement halogéné choisi parmi le fluor, le chlore, le brome ou l'iode, ou
   - un groupement nitro, ou
   - un groupement CR₁R₂R₃ où R₁ désigne un atome d'halogène et R₂, R₃ désignent indépendamment un atome d'hydrogène ou un atome d'halogène.

L'amorceur comporte au moins une fonction hydroxyle et il s'agit en particulier de l'eau ou d'un alcool primaire, par exemple choisi parmi : le méthanol, l'éthanol, le n-propanol, le n-butanol, le n-pentanol, le n-hexanol, l'alcool néopentylique, l'alcool benzylique et leurs mélanges.

Selon un mode de réalisation préféré de l'invention, l'amorceur est issu de la famille des composés naturels de faible masse ou bio-ressourcés hydroxylés, parmi lesquels on peut citer le bio-éthanol, le propanediol, le glycérol, le propylène glycol, l'isorbide, le xylitol, le mannitol, le maltitol, l'érythritol et d'une façon plus générale, les molécules naturelles de la famille des oses, tels que le fructose, le ribose et le glucose.

Selon un autre mode de réalisation, l'amorceur est un oligomère ou un polymère mono-ou polyhydroxylé, notamment choisi parmi :
- les (alcoxy)polyalkylène glycols, tels que le (méthoxy)polyéthylène glycol (MPEG/PEG), le polypropylène glycol (PPG) et le polytétraméthylène glycol (PTMG) ;
- les poly(alkyl)alkylène adipate diols tels que le poly(2-méthyl-1,3-propylène adipate)diol (PMPA) et le poly(1,4-butylène adipate)diol (PBA) ;
- les polydiènes éventuellement hydrogénés, α-hydroxylés ou α,ω-dihydroxylés tels que le polybutadiène α, ω-dihydroxylé ou le polyisoprène α,ω-dihydroxylé ;
- les polyalkylènes mono- ou polyhydroxylés tels que le polyisobutylène mono-ou polyhydroxylé;
- les polylactides contenant des fonctions hydroxy terminales, et
- les polyhydroxyalcanoates tels que le poly(3-hydroxybutyrate) et le poly(3-hydroxyvalérate).

Dans une autre variante de réalisation, l'amorceur est issu de la famille des polysaccharides modifiés ou non tels que l'amidon, la chitine, le chitosan, le dextran, la cellulose.

Selon une autre possibilité, l'amorceur est un co-oligomère ou un copolymère vinylique de la famille des polymères acryliques, méthacryliques, styréniques ou diéniques, qui résulte d'une co-polymérisation entre des monomères acryliques, méthacryliques, styréniques ou diéniques et des monomères fonctionnels présentant un groupement hydroxyle tels que des monomères acryliques ou méthacryliques hydroxylés comme par exemple le poly(4-hydroxybutyl acrylate), le poly(hydroxyéthyl acrylate) et le poly(hydroxyéthyl méthacrylate). Cette polymérisation pourra s'effectuer selon un procédé radicalaire conventionnel, un procédé radicalaire contrôlé ou un procédé anionique.

Selon une autre possibilité encore, l'amorceur est un copolymère vinylique obtenu par polymérisation radicalaire contrôlée dans laquelle l'amorceur radicalaire et/ou l'agent de contrôle portent au moins une fonction hydroxyle.

Les oligomères et polymères utilisés comme amorceurs ont une masse moléculaire moyenne en nombre allant de 1000 à 100000 g/mol, par exemple de 1000 à 20000 g/mol et un indice de polydispersité allant de 1 à 3 et par exemple de 1 à 2,6. L'utilisation de tels oligomères ou polymères permet d'obtenir des copolymères à blocs linéaires, en étoile ou greffés, selon la disposition de la ou des fonction(s) hydroxyle sur l'amorceur polymérique.

Le rapport molaire du monomère cyclique à l'amorceur polymérique varie de 5 à 500, plus préférentiellement de 10 à 200 et, mieux, de 40 à 100 (bornes comprises).

Le rapport molaire du monomère cyclique à l'acide sulfonique varie de 5 à 500, de préférence de 10 à 200 et plus préférentiellement de 40 à 100 (bornes comprises).

Le rapport molaire de l'amorceur à l'acide sulfonique varie de 0,1 à 10, de préférence de 1 à 5 (bornes comprises).

Selon un deuxième aspect, l'invention a trait à un procédé de préparation d'un polycarbonate homogène, sans liens éthers comme déterminé par RMN, comprenant une étape consistant à faire réagir un carbonate cyclique de formule 1 suivante : 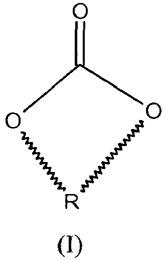 où R désigne un groupe alkyle linéaire renfermant de 2 à 20 atomes de carbone ou un groupe alkyle ou alkylaryle ramifié renfermant de 2 à 20 atomes de carbone, éventuellement substitués par un ou plusieurs substituants indépendamment choisis parmi des groupes oxo et halo, comme par exemple le fluor, le chlore, le brome ou l'iode, dans un solvant aromatique non chloré.

Cette étape de réaction nécessite une durée allant de 10 minutes à 12 h, de préférence comprise entre 1h à 3h. Elle a lieu à des températures comprises entre 0 et 110°C, de préférence comprises entre 20 et 30°C, bornes comprises.

L'invention a également pour objet un polycarbonate homogène susceptible d'être obtenu suivant le procédé ci-dessus, qui sera maintenant décrit plus en détail.

Par « polycarbonate homogène » on entend ici un polycarbonate exempt de liaisons éthers, homogénéité caractérisée par RMN grâce à l'absence de signaux du type C*H₂*-O-*CH₂.* Sa masse molaire en nombre est supérieure à 15000 g/mol avec des indices de polymolécularité faibles, compris entre 1 et 1,2.

A titre d'exemple non exhaustif de carbonate cyclique, on citera le triméthylène carbonate, le 2,2-diméthyl triméthylène carbonate et le 2-méthyl, 2-carboxybenzyl triméthylène carbonate.

Selon un mode de réalisation préféré, le carbonate cyclique est issu entièrement de ressources biorenouvelables. A titre d'exemple, le triméthylène carbonate sera avantageusement préparé par condensation entre du propane-1,3 diol bioressourcé et du dioxyde de carbone. Dans le cadre de l'invention, la propriété d'un produit d'être bioressourcé s'entend au sens de la norme ASTM D6852.

Le système catalytique selon l'invention est particulièrement avantageux, car il permet de polymériser des carbonates cycliques avec de faibles charges de catalyseur et nécessite des courts temps de réaction, même dans des conditions douces. De plus, les polycarbonates formés en présence dudit système catalytique sont exempts d'unités éthers intercalées par décarboxylation, et ceci même lorsque la réaction de polymérisation a lieu à température élevée, comme démontré par RMN

Par ailleurs, les polycarbonates obtenus sont exempts de toute trace métallique, car ils ont été synthétisés en l'absence de catalyseurs métalliques. Lorsqu'ils sont issus de ressources renouvelables, on obtient des polymères de type bio-polycarbonates. Cette propriété, combinée à la précédente, recommandent tout particulièrement les polycarbonates selon l'invention pour une utilisation comme biomatériaux, à savoir comme implants biodégradables ou pour encapsuler ou véhiculer des médicaments à libération contrôlée.

L'invention va maintenant être illustrée au moyen des exemples suivants, non limitatifs de la portée de l'invention.

### Exemple 1 : Préparation d'homopolymères de triméthylènecarbonate (TMC)

La procédure générale suivante a été utilisée pour mettre en oeuvre les procédés décrits ci-après.

Les alcools et le toluène ont été distillés sur sodium. Le Triméthylènecarbonate a été séché en solution de tétrahydrofurane (THF) sec sur dihydrure de calcium (CaH₂) et recristallisé 3 fois dans le THF froid. Les acides sulfoniques ont été utilisés sans purification complémentaire. La diisopropyl éthylamine (DIEA) a été séchée et distillée sur CaH₂ et conservée sur hydroxyde de potassium (KOH).

Les tubes de Schlenk ont été séchés au pistolet chauffant sous vide afin d'éliminer toute trace d'humidité.

La réaction a été suivie par RMN ¹H (résonance magnétique nucléaire du proton) Bruker et GPC (« gel permeation chromatography » ou chromatographie de perméation sur gel) Waters dans le THF. Pour ce faire, des échantillons ont été prélevés, neutralisés à la DIEA, évaporés et repris dans un solvant adéquat en vue de leur caractérisation. La RMN ¹H permet de quantifier les degrés de polymérisation des monomères (DP) en faisant le rapport d'intégration de la moitié des signaux des -CH₂- portant la fonction O-C(=O)O aux signaux des protons des -CH₂- portant la fonction -OH initialement sur l'amorceur. L'incorporation d'unités éthers dans le polycarbonate peut être détectée par le signal des -CH₂- portant la fonction éther -O-. Les spectres sont enregistrés dans le chloroforme deutéré, sur un spectromètre à 300 MHz. La GPC dans le THF nous donne la masse moléculaire moyenne en nombre Mₙ, en poids M_{w} et le degré de polymolécularité (PDI).

### Exemple 1A :

A une solution de triméthylènecarbonate (550mg, 40éq., 0,9 mol.l⁻¹) dans le toluène (6ml), sont ajoutés successivement le pentanol (14,7µl, 1éq.) et l'acide méthanesulfonique (8,8µl, 1éq.). Le milieu réactionnel est agité sous argon à 30°C jusqu'à conversion totale du monomère établie à partir de la RMN, soit 4h30.

### Conversion du TMC: ≥99%

RMN ¹H : DP = 32 avec 0% de décarboxylation (spectre montré dans la Fig1 . annexée) GPC : Mₙ = 6.000 g/mol, PDI = 1,18.

### Exemple 1B :

A une solution de triméthylènecarbonate (550mg, 40éq., 0,9 mol.l⁻¹) dans le toluène (6ml), sont ajoutés successivement l'eau (2,4µl, 1éq.) et l'acide méthanesulfonique (8,8µl, 1éq.). Le milieu réactionnel est agité sous argon à 30°C jusqu'à conversion totale du monomère établie à partir de la RMN, soit 2h30.
Conversion du TMC : ≥ 99%
RMN¹H : 0% décarboxylation
GPC : Mₙ = 4.500 g/mol, PDI = 1,08.

### Exemple 1C :

A une solution de triméthylènecarbonate (1,1g, 80éq.. 0.9 mol.l⁻¹) dans le toluène (12ml), sont ajoutés successivement l'eau (2,4µl, 1éq.) et l'acide méthanesulfonique (8,8µl, 1éq.). Le milieu réactionnel est agité sous argon à 80°C jusqu'à conversion totale du monomère établie à partir de la RMN, soit 1h30. Le spectre RMN correspondant est présenté dans le figure 2 annexée.
Conversion du TMC: ≥ 99%
RMN¹H : 0% décarboxylation
GPC : Mₙ = 7.500 g/mol, PDI = 1,17.
La formation d'unités éthers est détectée par un triplet à 3,50 ppm, correspondant aux CH₂ en alpha de l'oxygène -C*H₂*-O-C*H₂*-. Les spectres en annexe montrent qu'à différentes conversions et jusqu'à conversion totale de TMC, aucun signal n'est détecté à 3,50ppm aux côtés du signal du C*H₂*OH terminal.

### Exemple 1D : Comparaison amorçage à l'eau et au pentanol

### Amorçage à l'eau

A une solution de triméthylènecarbonate (825mg, 80éq., 0,9 mol.l⁻¹) dans le toluène (9ml), sont ajoutés successivement l'eau (1,8µl, 1éq.) et l'acide méthanesulfonique (40µl, 3éq.). Le milieu réactionnel est agité sous argon a 30°C jusqu'à conversion totale du monomère établie a partir de la RMN. soit 8h

Conversion : ≥ 99%
RMN¹H 0% decarboxylation
GPC Mₙ = 9 300 g/mol, PDI = 1,05 Profil monomodal

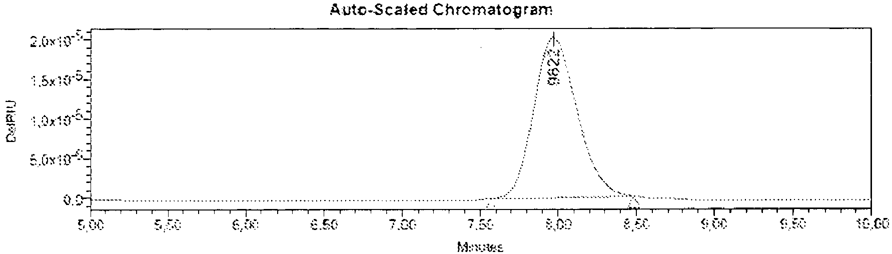

### GPC Sample Results

| | **Retention Time** | **Mn** | **Mw** | **MP** | **Polydisperstity** |
|---|---|---|---|---|---|
| 1 | 7.971 | 9229 | 9696 | 9822 | 1,05 |

### Amorçage au pentanol

A une solution de trimethylenecarbonate (825mg, 80éq., 0,9 mol l⁻¹) dans le toluene (9ml), sont ajoutés successivement le pentanol (11 µl, 1éq.) et l'aide méthanesulfonique (40µl, 1éq.) Le milieu reactionnel est agité sous argon a 30°C jusqu'à conversion totale du monomère établie a partir de la RMN, soit 10h

### Conversion ≥ 99%

RMN¹H 0% decarboxylation
GPC : Mₙ = 8 200 g/mol, PDI = 1,17 Profil bimodal

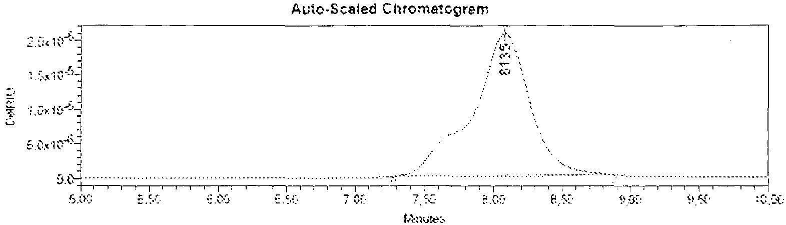

### GPC Sample Results

| | **Retention Time** | **Mn** | **Mw** | **MP** | **Polydispersity** |
|---|---|---|---|---|---|
| 1 | 8.038 | 8162 | 9541 | 8135 | 1,17 |

### Amorçage a l'eau

A une solution de trimethylenecarbonate (2,05g, 300eq 0,9 mol.l⁻¹) dans le toluène (22ml), sont ajoutes successivement l'eau (1,2µl, 1éq.) et l'acide méthanesulfonique (22µl, 5éq.). Le milieu réactionnel est agité sous argon a 80°C jusqu'à conversion totale du monomère établie a partir de la RMN, soit 4h

### Conversion : ≥ 99%

RMN¹H 0% décarboxylation
GPC Mₙ = 14.100 g/mol, PDI = 1,12 Profil monomodal

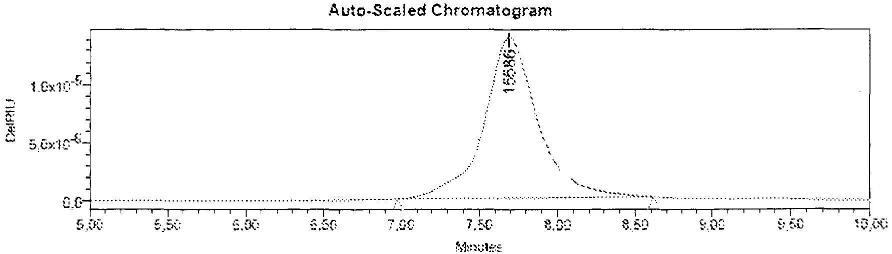

### GPC Sample Results

| | **Retention Time** | **Mn** | **Mw** | **MP** | **Polydispersity** |
|---|---|---|---|---|---|
| 1 | 7.692 | 14043 | 15768 | 16586 | 1,12 |

### Amorçage au pentanol

A une solution de triméthylènecarbonate (2,05g, 300éq., 0,9 mol.l⁻¹) dans le toluène (22ml), sont ajoutés successivement le pentanol (7,3µl, 1éq.) et l'acide méthanesulfonique (22µl, 5éq.). Le milieu reactionnel est agité sous argon à 80°C jusqu'à conversion totale du monomère établie a partir de la RMN, soit 8h.

Conversion : ≥ 99%
RMN ¹H 0% decarboxylation
GPC Mₙ = 15 300 g/mol, PDI = 1,42 Profil bimodal

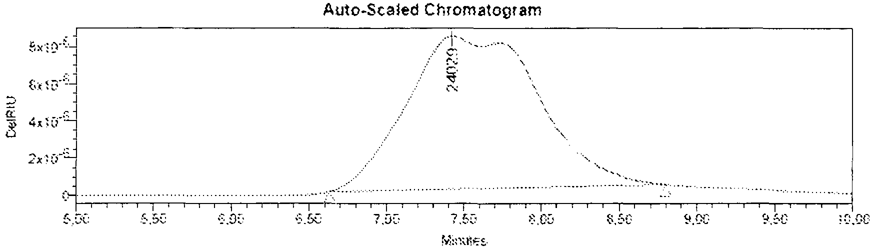

### GPC Sample Results

| | **Retention Time** | **Mn** | **Mw** | **MP** | **Polydispersity** |
|---|---|---|---|---|---|
| 1 | 7.423 | 16295 | 21686 | 24629 | 1,42 |

### Exemple 1^{E}: Synthese d'un homopolymere de TMC de masse élevée Mₙ > 20.000

A une solution de trimethylenecarbonate (1 375g, 100éq., 0,9 mol.l⁻¹) dans le toluene (15ml), sont ajoutes successivement l'eau (2,4µl, 1éq.) et l'acide methanesulfonique (43µl, 5éq.). Le milieu réactionnel est maintenu sous argon sous vive agitation a 30°C A conversion totale du monomère établie a partir de la RMN, soit 6h, 1.375g (100éq) de triméthylenecarbonate sont ajoutes en une fois. De la même façon, à conversion totale du monomère, une troisième portion de 1.375g (100éq) est ajoutée au milieu réactionnel

Conversion globale : ≥ 99%
RMN ¹H 0% decarboxylation
GPC : Mₙ = 25 000 g/mol, PDI = 1,07 Profil monomodal

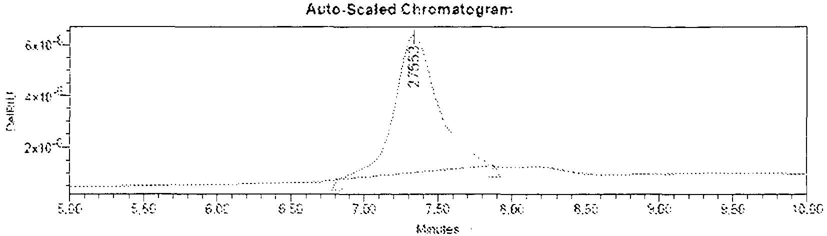

### GPC Sample Results

| | **Retention Time** | **Mn** | **Mw** | **MP** | **Polydispersity** |
|---|---|---|---|---|---|
| 1 | 7.336 | 25388 | 23982 | 27553 | 1,07 |

### Exemple 2 : Préparation de copolymères de trimethylènecarbonate (TMC)

### Exemple 2A : Obtention d'un copolymère diblocs poly(dimethylsiloxane)-b-poly(triméthylène carbonate)

A une solution de trimethylènecarbonate (137.5mg. 10éq., 0.9 mol l⁻¹) dans le toluène (1.5ml), sont ajoutes successivement le poly(diméthylsiloxane) α-hydroxyle (833mg, 0,13 mmol) et l'acide méthanesulfomque (8,8µl, 1éq.). Le milieu réactionnel est agité sous argon a 30°C jusqu'à conversion totale du monomère établie à partir de la RMN, soit 1h.
Conversion du TMC ≥ 99%
RMN ¹H DP(TMC) = 9, 0% decarboxylation
GPC Mₙ = 7 400 g/mol. PDI = 1,26

### Exemple 2B : Obtention d'un copolymère triblocs poly(triméthylène carbonate-b-poly(diméthylsiloxane) b poly(triméthylène carbonate)

A une solution de triméthylenecarbonate (275mg, 20eq , 0,9 mol.l⁻¹) dans le toluène (3ml), sont ajoutes successivement le poly(dimethylsiloxane) α,ω-dihydroxyle (833mg, 0.13 mmol) et l'acide méthanesulfonique (8,8µl, 1éq.). Le milieu réactionnel est agite sous argon a 30°C jusqu'à conversion totale du monomère établie a partir de la RMN soit 1h.
Conversion du TMC ≥ 99%
RMN ¹H : DP(TMC) = 19, 0% decarboxylation
GPC Mₙ = 8 500 g/mol, PDI = 1,24

### Exemple 2C : Obtention d'un copolymère diblocs poly(acide lactique)-b-poly(trimétylène carbonate)

A une solution de triméthylènecarbonate (275mg, 20éq., 0.9 mol.l⁻¹) dans le toluène (3ml), sont ajoutés successivement le poly(acide lactique) (Mₙ=1530 g.mol⁻¹) (206mg, 0,13 mmol) et l'acide méthanesulfonique (8.8µl, 1éq.). Le milieu réactionnel est agité sous argon à 30°C jusqu'à conversion totale du monomère établie à partir de la RMN, soit 1h.
Conversion du TMC: ≥ 99%
RMN ¹H : DP(TMC) = 9, 0% décarboxylation
GPC : Mₙ = 4.300 g/mol, PDI = 1,14.

### Exemple 2D : Obtention d'un copolymère diblocs poly(ε-caprolactone)-b-poly(triméthylène carbonate)

A une solution de triméthylènecarbonate (137,5mg, 10éq., 0,9 mol.l⁻¹) dans le toluène (1,5ml), sont ajoutés successivement la poly(ε-caprolactone) (166mg, 0,13 mmol) et l'acide méthanesulfonique (8,8µl, 1éq.). Le milieu réactionnel est agité sous argon à 30°C jusqu'à conversion totale du monomère établie à partir de la RMN, soit 1h.
Conversion du TMC: ≥ 99%
RMN ¹H : DP(TMC) = 9, 0% décarboxylation
GPC : Mₙ = 2.700 g/mol, PDI = 1,17.

### Exemple 2E : Obtention d'un copolymère triblocs poly(triméthylène carbonate)-poly(butadiène hydrogéné)-b-poly(triméthylène carbonate)

A une solution de 360mg (0,13 mmol de Krasol^{®} HLBH-P 3000 (polyoléfine hydrogénée de faible masse moléculaire, α-,ω-dihydroxylée, de Sartomer) (M~3.000 g/mol, Mₙ~5.550 g/mol, PDI = 1,08) dans 5,3ml de toluène, sont ajoutés successivement 490mg de triméthylène carbonate (40éq., 0,9 mol.l⁻¹) et 11 µl d'acide trifluorométhanesulfonique (1éq.). Le milieu réactionnel est agité sous argon à 30°C pendant 2h (conversion : 100%). Le milieu est neutralisé et évaporé.
RMN : DP(TMC) = 39
GPC : Mₙ = 9630 g/mol, PDI = 1,22.

### Exemple 2F: Obtention d'un copolymère triblocs poly(triméthylène carbonate)-poly(butadiène)- b-poly(triméthylène carbonate)

A une solution de 350mg (0,1 mmol) de Krasol^{®} LBH-P 3000 (polyoléfine de faible masse moléculaire, α-, ω -dihydroxylée, de Sartomer) (M~3000 g/mol, Mₙ~5600 g/mol, PDI = 1,11) dans 5,3ml de toluène, sont ajoutés successivement 490mg de triméthylène carbonate (40éq., 0,9 mol.l⁻¹) et 11 µl d'acide trifluorométhanesulfonique (1éq.). Le milieu réactionnel est agité sous argon à 30°C pendant 2h (conversion : 100%). Le milieu est neutralisé et évaporé.
RMN : DP(TMC)=4]
GPC : Mₙ = 10200 g/mol, PDI = 1,28.

## Revendications

1. Système catalyseur pour la réaction de polymérisation par ouverture de cycle de carbonates cycliques, ledit système étant formé d'un amorceur constitué d'eau et, comme catalyseur, d'un acide sulfonique de formule R'-SO₃H où R' désigne :
o un groupe alkyle linéaire renfermant de 1 à 20 atomes de carbone ou un groupe alkyle ramifié ou cyclique renfermant de 3 à 20 atomes de carbone, éventuellement substitués par un ou plusieurs substituants indépendamment choisis parmi des groupes oxo et halo, comme par exemple le fluor, le chlore, le brome ou l'iode, ou
o un groupe aryle éventuellement substitué par au moins :
- un substituant alkyle linéaire renfermant de 2 à 20 atomes de carbone ou un groupe alkyle ramifié ou cyclique renfermant de 3 à 20 atomes de carbone, ledit substituant alkyle étant lui-même éventuellement substitué par au moins un groupement halogéné choisi parmi le fluor, le chlore, le brome ou l'iode ou par un groupement nitro, ou
- un groupement halogéné choisi parmi le fluor, le chlore, le brome ou l'iode, ou
- un groupement nitro, ou
- un groupement CR₁R₂R₃ où R₁ désigne un atome d'halogène et R₂, R₃ désignent indépendamment un atome d'hydrogène ou un atome d'halogène.

2. Système selon la revendication 1 dans lequel ledit acide sulfonique est l'acide méthanesulfonique ou l'acide trifluorométhanesulfonique.

3. Système selon l'une quelconque des revendications 1 à 2 dans lequel le rapport molaire du monomère cyclique à l'amorceur va de 5 à 500, de préférence de 10 à 200 et plus préférentiellement de 40 à 100.

4. Système selon l'une quelconque des revendications 1 à 3 dans lequel lequel le rapport molaire du monomère cyclique à l'acide sulfonique varie de 5 à 500, de préférence de 10 à 200 et plus préférentiellement de 40 à 100.

5. Système selon l'une quelconque des revendications 1 à 4 dans lequel le rapport molaire de l'amorceur à l'acide sulfonique varie de 0,1 à 10, de préférence de 1 à 5.

6. Procédé de préparation d'un polycarbonate homogène, sans liens éthers, à partir d'un carbonate cyclique de formule I suivante : 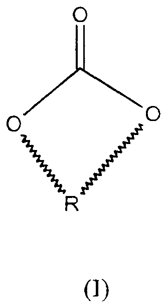 où R désigne un groupe alkyle linéaire renfermant de 2 à 20 atomes de carbone ou un groupe alkyle ou alkylaryle ramifié renfermant de 2 à 20 atomes de carbone, éventuellement substitués par un ou plusieurs substituants indépendamment choisis parmi des groupes oxo et halo, comprenant une étape de réaction dudit carbonate cyclique dans un solvant aromatique non chloré, en présence du système catalyseur selon l'une des revendications 1 à 5.

7. Procédé selon la revendication 6 dans lequel le carbonate cyclique est choisi dans le groupe : triméthylène carbonate, 2,2 diméthyl triméthylène carbonate et 2-méthyl, 2-carboxybenzyl triméthylène carbonate.

8. Procédé selon l'une des revendications 6 et 7 dans lequel le carbonate cyclique est issu d'une source renouvelable, par exemple préparé par condensation entre du propane-1,3-diol bioressourcé et du dioxyde de carbone.

9. Procédé selon l'une des revendications 6 à 8 dans lequel ladite étape de réaction a lieu à des températures comprises entre 0 et 110°C, de préférence comprises entre 20 et 30°C, pendant une durée de 10 minutes à 12h, de préférence comprise entre 1h à 3h.

## Patentansprüche

1. Katalysatorsystem zur Ringöffnungspolymerisationsreaktion von cyclischen Carbonaten, wobei das System aus einem aus Wasser bestehenden Initiator und einer Sulfonsäure der Formel R'-SO₃H als Katalysator besteht, wobei R' für
o eine lineare Alkylgruppe mit 1 bis 20 Kohlenstoffatomen oder eine verzweigte oder cyclische Alkylgruppe mit 3 bis 20 Kohlenstoffatomen, wobei die Gruppen gegebenenfalls durch einen oder mehrere unabhängig voneinander aus Oxo- und Halogengruppen, wie beispielsweise Fluor, Chlor, Brom oder Iod, ausgewählte Substituenten substituiert sind, oder
o eine Arylgruppe, die gegebenenfalls durch mindestens
- einen linearen Alkylsubstituenten mit 2 bis 20 Kohlenstoffatomen oder eine verzweigte oder cyclische Alkylgruppe mit 3 bis 20 Kohlenstoffatomen, wobei der Alkylsubstituent gegebenenfalls selbst durch mindestens eine aus Fluor, Chlor, Brom oder Iod ausgewählte Halogengruppe oder durch eine Nitrogruppe substituiert ist, oder
- eine aus Fluor, Chlor, Brom oder Iod ausgewählte Halogengruppe oder
- eine Nitrogruppe oder
- eine CR₁R₂R₃-Gruppe, wobei R₁ für ein Halogenatom steht und R₂ und R₃ unabhängig voneinander für ein Wasserstoffatom oder ein Halogenatom stehen,
substituiert ist,
steht.

2. System nach Anspruch 1, wobei es sich bei der Sulfonsäure um Methansulfonsäure oder Trifluormethansulfonsäure handelt.

3. System nach einem der Ansprüche 1 bis 2, bei dem das Molverhältnis von cyclischem Monomer zu Initiator im Bereich von 5 bis 500, vorzugsweise 10 bis 200 und weiter bevorzugt 40 bis 100 liegt.

4. System nach einem der Ansprüche 1 bis 3, wobei das Molverhältnis von cyclischem Monomer zu Sulfonsäure von 5 bis 500, vorzugsweise 10 bis 200 und weiter bevorzugt 40 bis 100 variiert.

5. System nach einem der Ansprüche 1 bis 4, wobei das Molverhältnis von Initiator zu Sulfonsäure von 0,1 bis 10 und vorzugsweise 1 bis 5 variiert.

6. Verfahren zur Herstellung eines homogenen Polycarbonats ohne Etherbindungen aus einem cyclischen Carbonat der folgenden Formel I: 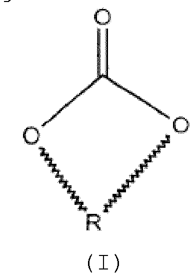 wobei R für eine lineare Alkylgruppe mit 2 bis 20 Kohlenstoffatomen oder eine verzweigte Alkyl- oder Alkylarylgruppe mit 2 bis 20 Kohlenstoffatomen steht, wobei die Gruppen gegebenenfalls durch einen oder mehrere unabhängig voneinander aus Oxo-und Halogengruppen ausgewählte Substitutenten substituiert sind, bei dem man das cyclische Carbonat in einem nichtchlorierten aromatischen Lösungsmittel in Gegenwart eines Katalysatorsystems gemäß einem der Ansprüche 1 bis 5 umsetzt.

7. Verfahren nach Anspruch 6, bei dem man das cyclische Carbonat aus der Gruppe Trimethylencarbonat, 2,2-Dimethyltrimethylencarbonat und 2-Methyl, 2-carboxybenzyltrimethylencarbonat auswählt.

8. Verfahren nach einem der Ansprüche 6 und 7, bei dem das cyclische Carbonat aus einer erneuerbaren Quelle stammt, beispielsweise hergestellt durch Kondensation zwischen 1,3-Propandiol aus biologischen Quellen und Kohlendioxid.

9. Verfahren nach einem der Ansprüche 6 bis 8, bei dem die Umsetzung bei Temperaturen zwischen 0 und 110°C, vorzugsweise zwischen 20 und 30°C, über einen Zeitraum von 10 Minuten bis 12 h, vorzugsweise zwischen 1 h und 3 h, stattfindet.

## Claims

1. Catalyst system for the ring-opening polymerization reaction of cyclic carbonates, said system being formed of an initiator composed of water and, as catalyst, of a sulfonic acid of formula R'-SO₃H, where R' denotes:
o a linear alkyl group including from 1 to 20 carbon atoms or a branched or cyclic alkyl group including from 3 to 20 carbon atoms, which groups are optionally substituted by one or more substituents chosen independently from oxo and halo groups, such as, for example, fluorine, chlorine, bromine or iodine, or
o an aryl group optionally substituted by at least:
- one linear alkyl substituent including from 2 to 20 carbon atoms or one branched or cyclic alkyl group including from 3 to 20 carbon atoms, said alkyl substituent being itself optionally substituted by at least one halogenated group chosen from fluorine, chlorine, bromine or iodine or by a nitro group, or
- a halogenated group chosen from fluorine, chlorine, bromine or iodine, or
- a nitro group, or
- a CR₁R₂R₃ group, where R₁ denotes a halogen atom and R₂ and R₃ independently denote a hydrogen atom or a halogen atom.

2. System according to Claim 1, in which said sulfonic acid is methanesulfonic acid or trifluoromethanesulfonic acid.

3. System according to either one of Claims 1 and 2, in which the molar ratio of the cyclic monomer to the initiator ranges from 5 to 500, preferably from 10 to 200 and more preferably from 40 to 100.

4. System according to any one of Claims 1 to 3, in which the molar ratio of the cyclic monomer to the sulfonic acid varies from 5 to 500, preferably from 10 to 200 and more preferably from 40 to 100.

5. System according to any one of Claims 1 to 4, in which the molar ratio of the initiator to the sulfonic acid varies from 0.1 to 10, preferably from 1 to 5.

6. Process for the preparation of a homogeneous polycarbonate, without ether links, starting from a cyclic carbonate of following formula I: 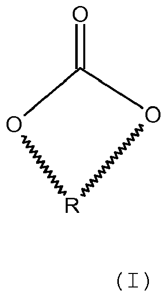 where R denotes a linear alkylene group including from 2 to 20 carbon atoms or a branched alkylene or alkylarylene group including from 2 to 20 carbon atoms, which groups are optionally substituted by one or more substituents chosen independently from oxo and halo groups, comprising a stage of reaction of said cyclic carbonate in a nonchlorinated aromatic solvent, in the presence of the catalyst system according to one of Claims 1 to 5.

7. Process according to Claim 6, in which the cyclic carbonate is chosen from the group: trimethylene carbonate, 2,2-dimethyltrimethylene carbonate and 2-methyl, 2-carboxybenzyl trimethylene carbonate.

8. Process according to either of Claims 6 and 7, in which the cyclic carbonate results from a renewable source, for example prepared by condensation between bioresourced 1,3-propanediol and carbon dioxide.

9. Process according to one of Claims 6 to 8, in which said reaction stage takes place at temperatures of between 0 and 110°C, preferably of between 20 and 30°C, for a period of time of 10 minutes to 12 h, preferably of between 1 h and 3 h.
